Europäisches Patentamt

European Patent Office

Office européen des brevets

(11) Publication number: **0 144 352**
**B1**

# EUROPEAN PATENT SPECIFICATION

(45) Date of publication of patent specification: **18.07.90**

(21) Application number: **84901917.9**

(22) Date of filing: **30.04.84**

(86) International application number:
**PCT/US84/00642**

(87) International publication number:
**WO 84/04466 22.11.84 Gazette 84/27**

(51) Int. Cl.⁵: **A 63 F 9/22, G 11 B 17/00**

(54) SEQUENCE VERSATILE VIDEO SYSTEM.

(30) Priority: **09.05.83 US 492815**

(43) Date of publication of application:
**19.06.85 Bulletin 85/25**

(45) Publication of the grant of the patent:
**18.07.90 Bulletin 90/29**

(84) Designated Contracting States:
**AT BE CH DE FR GB LI LU NL SE**

(56) References cited:
**EP-A-0 016 314**
**WO-A-83/02705**

(73) Proprietor: **GESHWIND, David M.**
**184-14 Midland Parkway**
**Jamaica NY 11432 (US)**

(72) Inventor: **GESHWIND, David M.**
**184-14 Midland Parkway**
**Jamaica NY 11432 (US)**

(74) Representative: **van der Beek, George Frans, Ir.**
**et al**
**Nederlandsch Octrooibureau Scheveningseweg**
**82 P.O. Box 29720**
**NL-2502 LS 's-Gravenhage (NL)**

Courier Press, Leamington Spa, England.

## Description

### Technical field

The present invention is a video amusement system in which the highly realistic background (or interactive scenery) against which the game is played is determined by the choices made by the player. In particular, such a video amusement system may be used in conventional video games.

### Background art

Video systems are well known in the prior art in which camera-operated video is recorded in a videodisc, read by a videodisc reader, and then displayed on a screen. The video signals are recorded along a spiral track on the videodisc such that each revolution of the videodisc exactly corresponds to the video signal of one frame. Each frame is divided into two fields, these fields being separated by vertical blanking intervals. The blanking intervals are aligned in the radial direction. In the conventional videodisc system, the frames are sequentially recorded on successive portions of the track in accordance with the story line of the motion picture. It will be noted that the accompanying audio signals are also recorded on the disc.

In some video amusement systems, however, it is necessary to incorporate alternative sequences of the motion picture. For example, many video amusement games require that the player's craft travel along a path. As the craft travels along the path, a motion picture of the constantly varying scenes ahead of the craft are displayed on the screen. However, when the craft reaches a branching point, the player must (according to the rules of the game) decide which path to follow. Depending on which path is followed, the corresponding sequence of scenes must be displayed on the screen.

In the event that one wished to use a real scene as a backdrop (or interactive scenery) for a video game including an aircraft, the correct scene would be displayed on the screen by selecting and reading the correct track on a videodisc by means of a beam of laser light focused by a lens (i.e., optical read head). Since the successive frames in a sequence of scenery are recorded on adjacent concentric portions of track, the head generally moves along the spiral track without interruption from one frame to the next. However, for path branching purposes, two or more distinct sequences of scenery corresponding to the branching paths at a point, must be recorded on the portions of track subsequent to the portion of track corresponding to the path preceding the branching point. These sequences of scenery are recorded in blocks of adjacent 360° portions of track. For the purposes of theoretical discussion, one may approximate the spiral track by a series of concentric tracks numbered consecutively. For example, if path A branches into paths B and C (assume all paths are of equal length), the scenery of path A would be recorded on tracks 1 through N, the scenery of path B would be recorded on tracks N+1 through 2N, and the scenery of path C would be recorded on tracks 2N+1 through 3N. Assume that the video amusement system comprises only one optical read head. Then if the player selected path C when his craft reached the branching point at the end of path A, the optical read head would have to jump from track N to track 2N+1, skipping the intervening N tracks. As a result, there will be a gap in the video signal during the interval during which the head is skipping over the unread tracks. The display screen would thus appear blank, which is undesirable.

Such blank spots between sequences of scenery could be avoided by providing either two videodisc readers or one video disc reader with two read heads. Both of these solutions suffer from disadvantages.

The first solution calls for the use of two videodisc readers. Referring back to the above-discussed example, path A and path B would be recorded on a first videodisc and path C would be recorded on a second videodisc. While the scenery of path A is being displayed by the first videodisc reader, the tracks on the second videodisc corresponding to the scenery of path C would be cued ready to be read by the second videodisc if the player were to select path C when his craft reaches the branching point. Naturally, the added cost of a second videodisc reader makes such a video amusement system expensive. In addition, such a solution has the drawback that only one alternative sequence can be cued. Thus, the number of possible paths at the branching point cannot exceed two.

The second solution calls for a single videodisc reader with two optical read heads. According to this arrangement, the first read head can be moving to the next position on the disc while the second read head is reading the current video frame or vice versa. For example, while the first read head is reading tracks 1 through N, corresponding to the scenery of path A, the second read head can be positioned at track 2N+1, which coresponds to the first frame of the scenery of path C. Depending on the player's selection as his craft approaches the branching point, either the first read head will read tracks N, N+1, N+2, and so on (player chooses path B) or the second read head will read tracks 2B+1, 2N+2, and so on (player chooses path C) The drawback of such a system comprising two read heads which read in alternating cooperation is that it is more complicated and more expensive than a one-head system. Also, the two-head system is limited in that only dual branches can be recorded on the disc.

### Summary of the invention

The present invention avoids the above disadvantages by interleaving the distinct video sequencs corresponding to the respective branching paths as set forth in independent claim 1. In one embodiment suitable for consumer and industrial videodisc systems, the successive frames of the respective scenery sequences correspond to parallel branching paths are interleaved while at the same time the fields of each frame are recorded on opposing 180° portions of concentric (in theory only) adjacent tracks, not in succession on a continuous portion of track. The read head must proceed from the portion of track corresponding to the final frame of the path preceding the branching point to the portion of track corresponding to the first field of the first frame of the path selected by the player. If the number of paths diverging from the branching point is three, then the read head must either continue along the spiral track without skipping (if path $P_1$ is chosen) or skip one track (path $P_2$) or skip two tracks (path $P_3$) depending on which of the three paths is selected. Thereafter, as the frames of the selected path is read in sequence, the read head must skip two tracks at the end of each field. This skipping of one or two tracks is in marked contrast to the above-mentioned skipping. The conventional videodisc revolves at a rate of 30 revolutions per second. Coupled with the fact that any given path in a game may be travelled in a time span on the order of tens or hundreds of seconds it will be seen that N will be on the order of 300, 3000 or greater.

The jumping according to the present invention takes place during the blanking intervals which separate the fields. This avoids the undesirable episodes in which the display screen is blank during the time the read head is skipping because the duration of the skip will be less than that of the blanking interval. The result is that the scenery along the path selected by the player is displayed on the screen without discontinuities.

In another embodiment, suitable for consumer and industrial videodisc systems, the successive frames of each scenery sequence corresponding to a particular branching path are interleaved with the field of each frame recorded in succession on the same 360° portion of track. For example, if the number of paths at a branching point is X, then (again approximating the spiral track by a series of concentric tracks numbered consecutively) the successive frames of the scenery sequence corresponding to path $P_1$ will be recorded on tracks N, $N+X$, $N+3X$, etc. Those of path $P_2$ will be recorded on tracks $N+1$, $N+X+1$, $N+2X+1$, etc. Those of path $P_x$ will be recorded on tracks $N+X-1$, $N+2X-1$, $N+3X-1$, etc. The result is that the scenery of any one of the branching paths can be displayed by a read process in which the read head must skip at most $X-1$ tracks between successive frames of that branching path. This is in contrast to the N (on the order of $10^3$ or more) tracks which must be skipped using other techniques. Again, the disadvantage of discontinuities in the scenic display is avoided because the $X-1$ tracks can be skipped within the blanking interval.

From WO 83/02705 (Rodesch) an arrangement of information is known which can be spiraled onto a disc like the arrangement of information of present applicaton. However, in WO/02705 the arrangement is conceived of consisting of parallel nested spirals each containing a single image stream. In contradistinction thereto present application comprises an arrangement consisting of a single spiral track which contains several image streams multiplexed in an interleaved manner. Moreover, Rodesch uses multiple read heads to provide the number of image streams and present system uses only a single read head to provide several image streams.

Brief description of the drawings

The present invention will be described in detail with reference to the following drawings in which:

Figure 1 shows a plan view of the data recorded on a conventional videodisc of constant angular velocity;

Figure 2 shows a diagram of the paths preceding and following a branching point: with "⊗" denoting path A; with "o" denoting path B; with "◆" denoting path C; with "△" denoting path D;

Figure 3 shows a diagram of the interleaved arrangement, according to a preferred embodiment of the present invention, for the recorded frames of the scenery sequences corresponding to the paths depicted in Figure 2;

Figure 4 shows a possible path diagram for a video game according to the present invention in which the player must select his craft's path at each branching point;

Figure 5 shows a block diagram of a video amusement system according to the present invention;

Figure 6 shows a perspective view of the electrofocusing unit of a conventional videodisc reader;

Figure 7 shows the tracking error detecting system of a conventional videodisc reader for three positions of the laser beam as it impinges on the videodisc;

Figure 8 shows a diagram of the laser beam trace in the normal read mode (a) and in the 3X forward mode (b);

Figure 9 shows the successive positions of the laser beam at various stages of the track skipping process and the corresponding tracking error voltage for a conventional track skipping system; and

Figure 10 shows a diagram of the interleaved arrangement according to another preferred embodiment of the present invention, for the recorded frames of the scenery sequences corresponding to the paths depicted in Figure 2.

Description of the invention

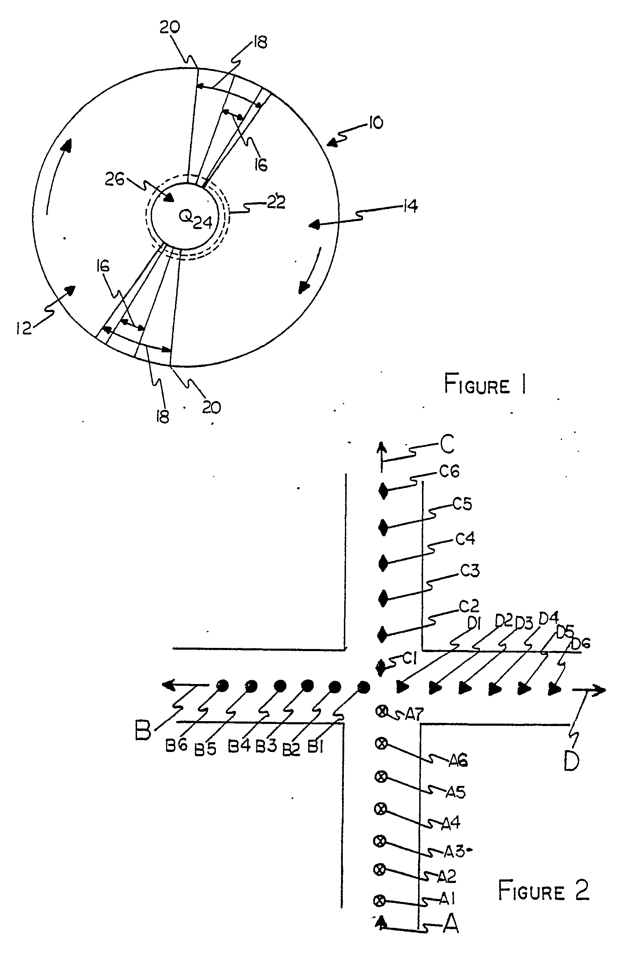

Figure 1 shows the video data which is recorded on a conventional videodisc 10. Each revolution of videodisc 10 exactly corresponds to the video signal of one frame. Each frame is subdivided into a portion bearing a first field 12 and a portion bearing a second field 14. The sync signals are aligned in the radial direction, being recorded on opposing syn sectorial sections 16 of videodisc 10. In addition, the vertical blanking signals, which separate the top of one field from the bottom of the previous field, are recorded on opposing blanking sectorial sections 18 which subtend an angle larger than the angle subtended by sync sectorial section 16. It will be noted that the sync signals are superimposed on the vertical blanking signals, i.e., each sync sectorial section 16 lies within a blanking sectorial section 18. The top of each field is demarcated by radials 20.

The video and audio signals of the first and second fields of successive frames are recorded along high-density (600 lines/mm) spiral track 22 in sequence. During playback, the spiral track 22 is read from the inner circumference toward the outer circumference. In a conventional constant-angular-velocity system, the videodisc revolves about centre hole 24 at 1800 rpm. The area between the inner circumference of spiral track 22 and center hole 24 is taken up by the label 26.

Figure 2 shows a representative branching point in the path diagram of a video game. The player's craft approaches the branching point along path A, proceeding from position A1 to position A7 (the positions along path A are denoted by the symbol "⊗"). A position A7, the player must choose which path to follow. The player may turn left onto path B "o", continuing straight along path C "◆", or turn right on path D "△". The successive positions of the respective paths are identified by sequential numbering (path B, comprising tracks B1, B2, B3 . . .; path C, comprising tracks C1, C2, C3 . . .; and path D, comprising tracks D1, D2, D3 . . .).

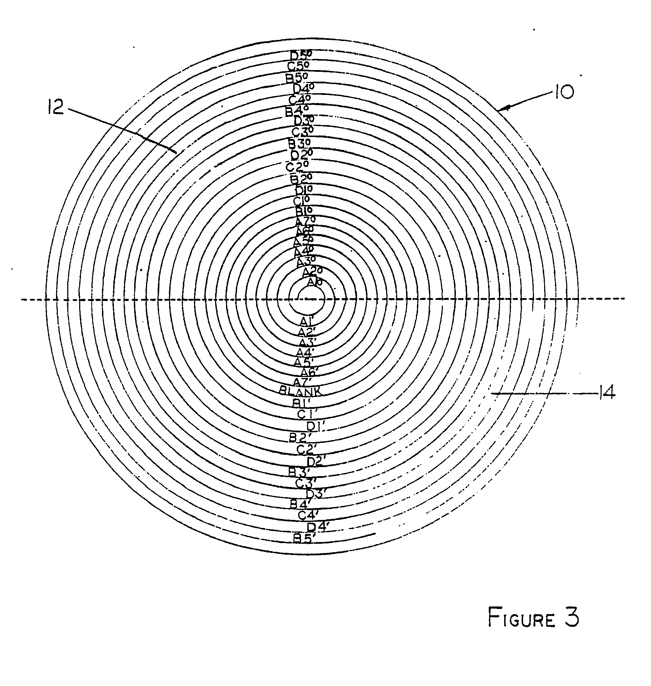

Figure 3 shows a diagram of the interleaved arrangement, according to a preferred embodiment of the present invention, for the recorded frames of the scenery sequences corresponding to the paths depicted in Figure 2. This embodiment is suitable for consumer and industrial videodisc systems. The frames corresponding to the successive positions A1 to A7 of the player's craft are recorded in adjacent 360° portions A1°, A1', A2°, A2', etc., of track on the videodisc 10. Each frame contains the scenery as seen from the vantage of the craft's cockpit at the corresponding position of the player's craft along the path of travel. The frames corresponding to the craft's successive positions along paths B, C and D are recorded in an interleaved arrangement, with the fields of each frame being recorded on opposing 180° portions of track, not successively on the same 350° portion of track. The sequence of fields, as shown in Figure 3, is as follows (the first and second fields being denoted by a subscript zero and one, respectively): A1°, A', . . . A7°, A7', B1°, C1', D1°, B1', C2°, D1', B2°, C2', D2°, B2', C3°, D2', B3°, C3', D3°, B3', C4°, D3', B4°, C4', D4°, B4', C5°, D4', B5° . . . .

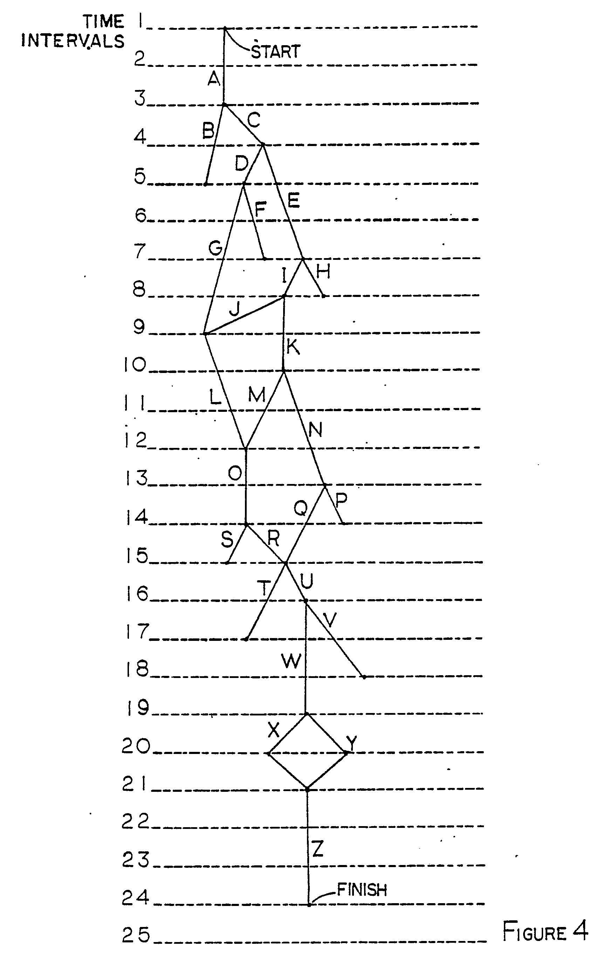

Figure 4 shows a diagram of the alternative paths of travel during the course of a representative game in which the player must select his craft's path at each branching point. Naturally, the variety of possible path arrangements is limitless and the representative arrangement shown in Figure 4 is presented for the purpose of illustration only. It will be assumed that two frames are displayed during each arbitrary time interval shown in Figure 4 for the purpose of simple illustration only. For example, as the craft travels along path A from time 0 ato time 3, frames A1, A2, A3, A4, A5 and A6 will be displayed sequentially. If the player directs his craft along path B, frames B1, B2, B3 and B4 will be displayed during the interval from time 3 to time 5. On the other hand, if the player directs his craft along path C, frames C1 and C2 will be displayed during the interval from time 3 to time 4, and so forth. As noted with regard to Figure 3, these frames will be recorded in an interleaved arrangement. The sequence of frames in such an arrangement will be discussed later with regard to the function of the present invention.

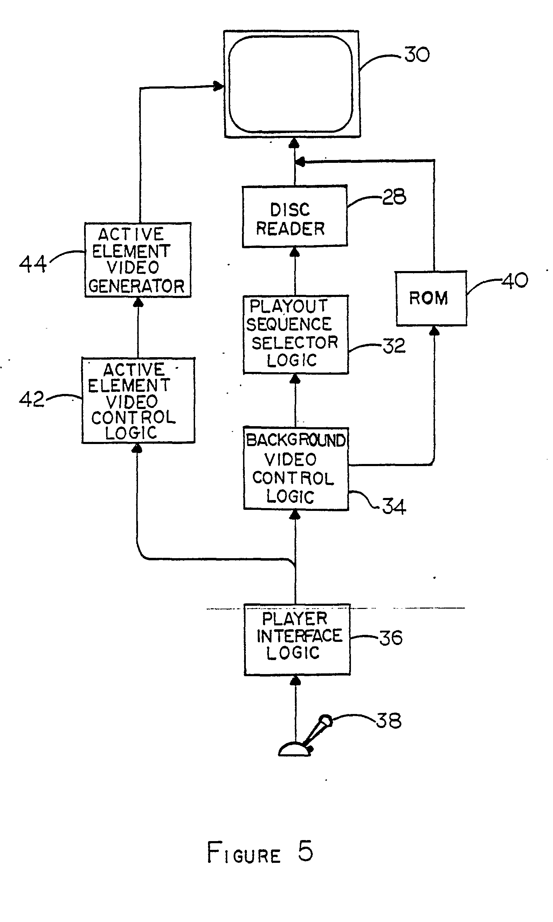

Figure 5 shows a block diagram of a video amusement system according to the present invention. The videodisc is read by disc reader 28. The frames of scenery recorded on the videodisc are then displayed on display 30. The playout sequence selector logic 32 controls which frame of scenery the disc reader 28 reads at any given moment. The playout sequence selector logic 32 is in turn generated by a minicomputer or microcomputer (not shown) containing the background video control logic 34. (The microprocessor might reside in the videodisc player itself). The player interface logic 36 is input into the minicomputer and processed in accordance with the background video control logic 34. The player interface logic 36 will represent the position of the player's craft along the path arrangement depicted in Figure 4. In accordance with the background video control logic 34, the minicomputer (or microcomputer) will either output the appropriate playout sequence logic 32 in response to the player's correct control of his craft (via control knob 38), or cause the crash scene to be displayed on display screen 30 in response to the player's misguided control of his craft. The frame or frames depicting the crash scene are not recorded on the videodisc. The data for the crash scene are stored in read-only memory 40. It will be noted that in case of such a crash, the disc reader is bypassed. It is also noted that the crash scene may also be generated by a microprocessor on the fly, not only in the read-only memory.

As shown in Figure 5, the player interface logic 36 is also input into a minicomputer containing the active element video control logic 42. The minicomputer (not shown) controls the active element video generator 44, which displays enemy aircraft and the like on display screen 30. Such enemy craft are superimposed on the scenery displayed by disc reader 28.

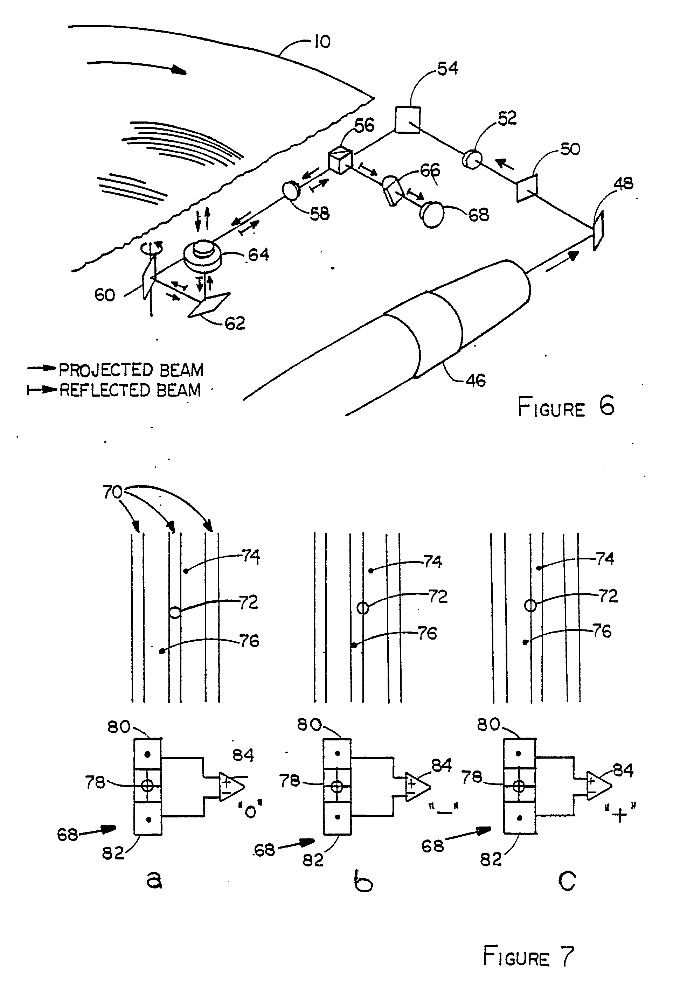

The electrofocusing unit of a conventional videodisc reader is shown in Figure 6. A vertically polarized light beam having a wavelength of extremely narrow bandwidth is projected by laser 46. The laser beam is deflected by fixed-angle mirror 48. The use of a fixed-angle mirror to deflect the laser beam enables the electrofocusing unit to be housed in a compact space. Following this first deflection, the laser beam is diffracted by grating 50, comprising a piece of glass with several fine horizontal lines etched in it. As the laser beam passes through grating 50, it is divided into three beams: a center bright beam and secondary beams above and below the main beam. Although grating 50 in fact produces more than these three beams, the other beams are reduced in brightness and may be ignored. The main (center) beam is used for detecting both the FM signal on the videodisc 10 and the focus error. The two secondary beams are used for detecting a tracking error.

The three beams will be collectively referred to as the laser beam. After passing through grating 50, the laser beam is focused by spot lens 52 so that the cross section of the laser beam completely fills the aperture of the objective lens 64. Then the laser beam is deflected by fixed-angle mirror 54. The vertically polarized laser beam then passes through beam splitter 56 without being deflected and onto one-quarter wavelength retardation plate 58. Upon passing through the one-quarter wavelength retardation plate 58, the vertically polarized laser beam is converted to a circularly polarized laser beam (in the counterclockwise direction). This circularly polarized beam is deflected by radial tracking mirror 60 and fixed-angle mirror 62 onto the aperture of objective lens 64. The radial tracking mirror 60 is servo-controlled to ensure correct tracking along the videodisc by the laser beam. The objective lens 64 can be translated along its optical axis in the manner of a microscope and is servo-controlled to ensure proper focusing of the projected laser beam onto the videodisc.

The data comprising each frame are recorded on the tracks in the form of pits. These pits modulate the projected laser beam, which is reflected by the surface of videodisc 10. The reflected laser beam, which carries the video information in the form of modulated luminance, retraces the path of the projected laser beam. The reflected laser beam is converted from a counterclockwise circularly polarized laser beam to a horizontally polarized laser beam upon passage through the one-quarter wavelength retardation plate 58. The reflected laser beam then travels to beam splitter 56, which has the property of splitting a nonpolarized light beam into a vertically polarized component and a horizontally polarized component. Because the incoming reflected laser beam is horizontally polarized, laser beam splitter 56 changes the direction of the beam by 90°. This prevents backtalk that is the result of feedback of the reflected laser beam back into the laser 46. The reflected laser beam, which is deflected by beam splitter 56, then passes through cylindrical lens 66 and impinges on photodiode unit 68. The characteristics of cylindrical lens 66 are such that the cross section of the reflected laser beam landing on photodiode unit 68 is circular only when the projected laser beam is perfectly focused onto videodisc 10 by objective lens 64. If the beam becomes out of focus due to the up and down movements of videodisc 10, the beam cross section will be elliptical when it impinges on photodiode unit 68.

Thus, the reflected laser beam contains the following information when it impinges on photodiode unit 68: 1) luminance modulation corresponding to the video and audio multiplex FM signal; 2) deformation of the cross section of the beam impinging on photodiode 68 corresponding to the focus error signal; and 3) a difference in luminance between the secondary beams detected by photodiode 68 corresponding to the tracking error signal. In order to explain the present invention, it will be necessary to describe in detail the manner in which the tracking error signal is generated in a conventional videodisc reader.

Figure 7 shows the tracking error detecting system of a conventional videodisc reader. As noted earlier, the projected laser beam is split into a main beam and two secondary beams upon passing through grating 50. The two secondary beams are used to ensure that the main beam is accurately targeted on the appropriate track 70. Figure 7a depicts the case when the main beam is accurately targeted on the appropriate track 70. The main beam spot 72 is formed by the main beam impinging on the videodisc. The secondary beam spots 74 and 76 are formed by the respective secondary beams impinging on the videodisc. Since the amount of light reflected from the pit area comprising the track is less bright than light reflected from areas of the videodisc other than the track, the brightness of the secondary beams will differ unless equal areas of beam spots 74 and 76 impinge on the track. Figure 7a depicts the case where no portion of either secondary beam spot impinges on the track. In this case the brightness of the secondary beams will be equal. Photodiode unit 68 comprises four-gang photodiode 78 and secondary photodiodes 80 and 82. Four-gang photodiode 78 converts the cross-sectional shape of the main beam into the focus error signal. Photodiode 80 converts the light intensity of secondary beam 76 into an electrical signal. Photodiode 82 converts the light intensity of secondary beam 74 into an electrical signal. The electrical signal produced by photodiode 82 is subtracted from the electrical signal produced by photodiode 80 by means of operation circuit 84. This difference output by operation circuit 84 is the tracking error signal. In Figure 7a the tracking error signal equals "0". Figure 7b and c depict the cases when the main beam is not accurately targeted. In Figure 7b secondary beam spot 76 impinges on the track, whereas beam spot 74 does not. The result is a "−" tracking error signal. In Figure 7c beam spot 76 does not impinge on the track, whereas beam spot 74 does. The result is a "+" tracking error signal. The position of the main beam spot 72 is maintained in the center of the track by electromagnetically controlled tracking mirror 60 despite high-speed tracking variations (e.g. due to disk eccentricity). The angle of tracking mirror 60 responds to the tracking error signal by means of the tracking servo loop (not shown). The overall position of the objective lens 64 is also controlled in response to the tracking error signal.

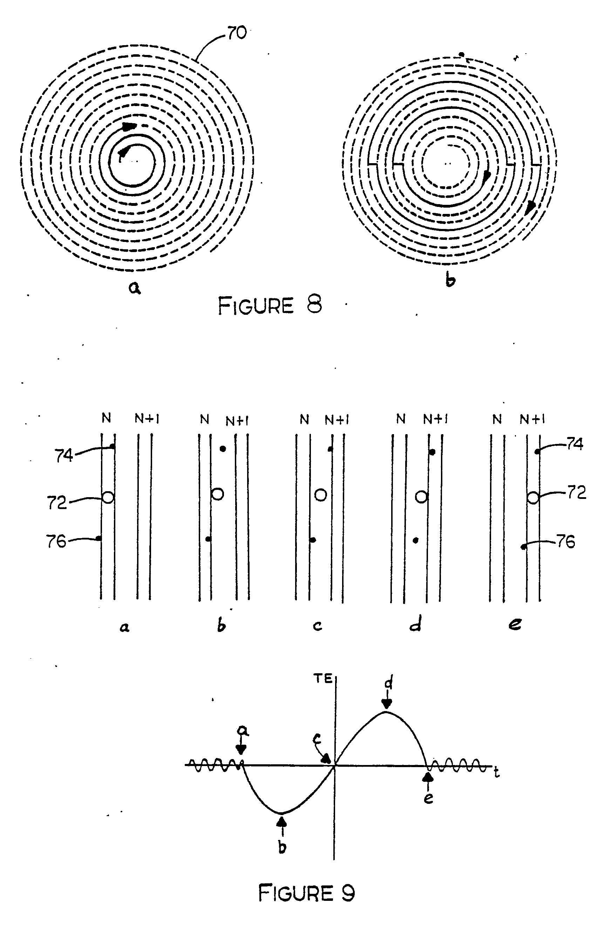

Figure 8a shows the laser beam trace along the spiral track 70 of videodisc 10 during the normal mode of operation. The objective lens 64 (see Figure 6) of videodisc reader 28 (see Figure 5) focuses the laser beam on the center of track 70, proceeding continuously along the spiral track from the inner circumference to the outer circumference. Figure 8b shows the laser beam trace during the fast forward mode of operation. This is a standard mode in a conventional consumer videodisc reader and is particularly relevant to the present invention as will be made apparent in what follows. Fast forward play is made possible by skipping one track after each field (i.e., two times per frame).

Figure 9 shows the successive positions of the laser beam spots at various stages of the track skipping process. A graph of the corresponding tracking error (TE) voltage versus time (t) during this process is also shown. The skipping of tracks is achieved by controlling the angle of tracking mirror 60 (see Figure 6). As noted earlier, all track skipping takes place only during the vertical blanking intervals.

Various stages of the forward track jumping process are shown in Figure 9 denoted as a through e. Since the fast forward mode is achieved by means of forward jumps at the end of each field, how the forward track jump takes place will be described briefly.

The disc reader 28 is controlled by the playout sequence selector logic 32. When a skip of one track in the forward direction is required, the playout sequence selector logic 32 issues a forward skip command to disc reader 28. The tracking servo loop (not shown) is opened at the vertical sync interval upon receipt of this forward skip command. The tracking mirror 60 is driven in the forward direction. Assume that the forward skip command is issued when the main beam spot 72 is positioned correctly on track N (Figure 9a). As can be seen from the accompanying graph in Figure 9, during normal tracking, the tracking error voltage will fluctuate about the value 0 within narrow limits because of the constant correction provided by the tracking servo loop. As tracking mirror 60 is moved, the laser beam spots shift in the forward (outer) direction, toward the adjacent track N+1 producing the half of the tracking error voltage similar to a sine curve. Figure 9b shows an intermediate stage in the track jumping process wherein secondary beam spot 74 is located midway between track N and track N+1 and secondary beam spot 76 overlaps track N. This stage corresponds to the maximum "−" tracking error signal (see point b on TE versus t curve). Figure 9c shows the midway point in the track jumping process wherein secondary beam spot 74 is located a distance from track N+1 and secondary beam spot 76 is located some distance from track N. The result is an error voltage of "zero" at that moment. This zero-cross signal activates a deceleration signal which is impressed on the mirror drive signal. Figure 9d shows an intermediate stage in the slowing down of the rotation of tracking mirror 60 wherein secondary beam spot 74 overlaps track N+1 and secondary beam spot 76 is located between track N and track N+1. This stage corresponds to the maximum "+" tracking error signal (see point d of TE versus t curve). When main beam spot 72 is positioned correctly on track N+1 (Figure 9e) the error voltage becomes zero again and then the tracking servo loop (not shown) is closed by the servo detection signal. The normal tracking servo operation is restored.

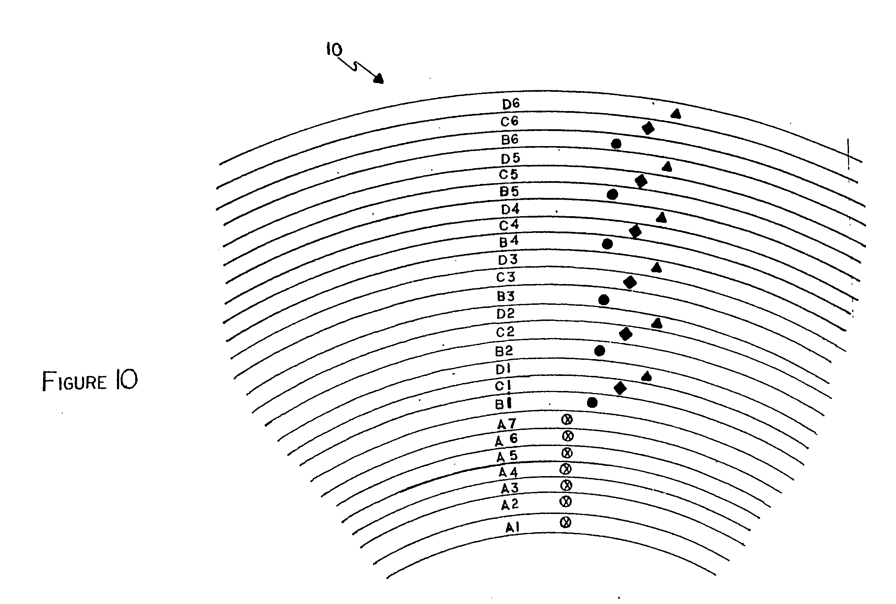

Figure 10 shows a diagram of the interleaved arrangement, according to another embodiment of the present invention, for the recorded frames of the scenery sequences corresponding to the paths depicted in Figure 3. This embodiment is suitable for industrial videodisc systems. The frames correspond to the successive positions A1 to A7 of the player's craft are recorded on adjacent tracks A1 to A7 on the videodisc 10. Each frame contains the scenery as seen from the vantage of the cockpit of the player's craft when the craft is at the corresponding position along the path of travel. The frames corresponding to the craft's successive positions along paths B, C and D are recorded in an interleaved arrangement, with the fields of each frame being recorded in succession on a 360° portion of track, not on opposing 180° portions of adjacent track as was the case in the first preferred embodiment. The sequence of tracks as shown in Figure 10 is as follows: A1, A2, . . . A7, B1, C1, D1, B2, C2, D2, B3, C3, D3 . . ., B6, C6, D6. It is noted that the arrangement according to Figure 10 allows stop action and other spiral effects.

The functioning of the present invention will now be described in detail with reference to Figure 2. As the player's craft travels along path A, from position A1 to position A7, the corresponding concentric (in theory only) tracks A1 to A7 are read by the videodisc reader 28. Each frame contains the scene ahead of the craft as observed from the vantage of the craft's cockpit. As the position of the craft changes, the scenery displayed also changes. The sequence of frames corresponding to a particular path comprises a motion picture of the scenery, which is displayed on the screen as the game progresses.

When the craft reaches the branching point at position A7, the player must choose which of paths B, C and D his craft will travel along. Each of these paths has a corresponding scenery sequence that is distinctive. Thus, the scenery displayed will depend on which path is selected by the player when his craft reaches the branching point. According to the present invention, the playout sequence selector logic 32 will control the videodisc reader 28 in response to the player's path selection. The videodisc reader 28 is instructed to read that portion of the spiral track on which is recorded the first field of the first frame of the scenery sequence corresponding to the selected path. (Recall that each frame comprises two fields, the first and second fields being recorded in succession on a 360° portion of track in the second embodiment and on opposing 180° portions of adjacent tracks in the first embodiment).

In the first embodiment (see Figure 3), suitable for both consumer and industrial videodisc systems, the first field to be read after field A7° will be either field C1' if path C is chosen of A7' if path B or D is chosen by the player. If the player selects path B, the videodisc reader 28 will read fields A7' and then B1° in succession, without skipping any tracks. The remaining fields corresponding to the scenery sequence of path B will be read in the following order: B1', B2°, B2', B3°, B3' .... This is accomplished by skipping one track at the end of each read field in accordance with the fast forward mode described earlier. If the player selects path C, the videodisc reader 28 will read fields A7° and then C1' in succession by skipping one track during the blanking interval at the end of field A7'. It is noted that there is no field labelled C1°. The remaining fields corresponding to the scenery sequence of path C will be read in the following order: C2°, C2', C3°, C3', .... Again, this is accomplished by skipping one track at the end of each read field in accordance with the fast forward mode. If the player selects path D, the videodisc reader 28 will read fields A7' and D1° in succession by skipping one track during the sync interval at the end of field A7'. The remaining fields corresponding to the scenery sequence of path D will be read in the following order: D1', D2°, D2', D3°, .... Again the fast forward mode is utilized.

Thus, the interleaving arrangement of the present invention allows the scenery sequence of the selected path to be displayed without discontinuities because no more than one track is skipped at any given time, which skip can be accomplished within the blanking interval at the end of the field by available consumer or industrial machines.

In the second embodiment, which is not implementable on some consumer systems, the successive frames of each scenery sequence corresponding to a particular branching path are interleaved, with the two fields of each frame recorded in succession on one 360° portion of track. For example, if the number of branching paths at a branching point is X, then the successive frames of the scenery sequence corresponding to branching paths $P_1$ will be recorded on tracks N, N+X, N+2X, N+3X, ..., again treating the spiral track as a series of concentric tracks (for the sake of analytical simplicity) numbered consecutively and assuming the scenery sequence of the path preceding the branching point ends on track N−1). The frames of the scenery sequence path $P_2$ will be recorded on tracks N+1, N+X+1, N+2X+1, .... Those of path $P_x$ will be recorded on tracks N+1−X, N+2X−1, N+3X−1, .... The result is that the scenery sequence of a particular branching path can be displayed by a read process in which the read head must skip at most X−1 tracks between successive frames of that branching path (i.e. one less than the number of branching paths). This is in contrast to the previously discussed video amusement systems in which blocks of tracks corresponding to all of the frames comprising the scenery sequences of non-selected paths must be skipped at one time. In such systems the number of tracks that must be skipped at a branching point depends on the number of frames comprising the scenery sequence corresponding to a branching path. For example, to read the track on which the first frame of path $P_2$ is recorded, the previously discussed system requires that all of the tracks corresponding to the frames of path $P_1$ be skipped (the number of such tracks could be on the order of hundreds).

Figure 10 shows an interleaved arrangement according to the second embodiment, where X=3. Again, approximate the spiral track by a series of concentric tracks numbered consecutively. The first track to be read after track A7 will be either track B1, track C1, or track D1. If the player selects path B. the videodisc reader 28 will read tracks A7 and B1 in succession, without skipping any tracks. The remaining tracks corresponding to the scenery sequence of path B will be read in the following order: B2, B3, B4, B5, B6, .... This is accomplished by skipping two tracks at the end of each frame.

If the player selects path C, the videodisc reader 28 will read tracks A7 and C1 in succession by skipping one track during the blanking interval at the end of frame A7. The remaining tracks corresponding to the scenery sequence of path C will be read in the following order: C2, C3, C4, C5, C6, .... Again this is accomplished by skipping two tracks at the end of each frame. If the player selects path D, the videodisc reader 28 will read tracks A7 to D1 in succession by skipping two tracks during the blanking interval at the end of frame A7. The remaining tracks corresponding to the scenery sequences of path D will be read in the following order: D2, D3, D4, D5, D6, .... Again this is accomplished by skipping two tracks at the end of each frame.

The principle of the present invention can be applied to video games comprising a complex of paths and branching points. First, the successive frames of the respective scenery sequences corresponding to the parallel paths must be recorded on the videodisc in a suitably interleaved pattern. Then the videodisc reader must be controlled in response to the player's path selections. By skipping a number of tracks during the blanking interval — at the end of each field, at the end of each frame, or any combination thereof — the videodisc reader can display the scenery sequence of frames corresponding to the path travelled by the player's craft without discontinuities (i.e. blankness) on the screen. The interleaved pattern allows a read head to skip fewer tracks at a time.

For the purposes of illustration, the interleaved pattern of the rerecorded frames of the parallel paths comprising the path diagram shown in Figure 4 will be presented. It will be assumed that the maximum number of tracks that can be skipped at one time equals two and that the skips take place only at the end of frames. Also it will be assumed that two frames are displayed during each time interval, merely for the purposes of simplified illustration. For example, the frames of the scenery sequence corresponding to path A will be recorded on tracks A1, A2, A3, A4, A5 and A6, which will be displayed from time 0 to time 3. In view of the above assumptions the interleaved arrangement of frames on successive tracks (again approximating the spiral track by concentric tracks), starting with the inner circumference of the prerecorded disc, is as follows: A1, A2, A3, A4, A5, A6, C1, B1, C2, B2, E1, D1, B3, E2, D2, B4, E3, G1, F1, E4, F2, G2, E5, F3, G3, E6, F4, G4, H1, I1, G5, H2, I2, G6, K1, J1, G7, K2, J2, G8, K3, L1, K4, L2, M1, N1, L3, M2, N2, L4, M3, N3, L5, M4, N4, L6, N5, O1, N6, O2, P1, Q1, O3, P2, Q2, O4, Q3, S1, R1, Q4, S2, R2, T1, U1, T2, U2, T3, V1, W1, T4, V2, W2, V3, W3, V4, W4, W5, X1, Y1, X2, Y2, X3, Y3, X4, Y4, Z1, Z2, Z3, Z4, Z5, Z6.

It will be noted that no matter what path the player chooses in getting from the starting point to the finish, it will not be necessary to skip more than two tracks at any given time. Thus, the scenery will be displayed on the screen without blank intervals througout the course of the game.

It will be understood that the above-described embodiments have been presented for the purposes of illustration only and are not intended to limit the scope of the invention as claimed. The interleaving principle can be employed in many variations without departing from the scope of the present invention. For example, the same technique would be of use on either nonoptical videodiscs (capacitive, magnetic, and other) or on videotape. In addition, the present invention is not limited to use in vehicle/path decisions. For example, the interleaving technique also has the following applications: (1) non-vehicular motions; (2) motion of objects from a fixed perspective (e.g., variable means); (3) continuous (but quantized) motions e.g., tilt or turn by a finite angle depending on "how far" the player turns the control, not simply in which direction he turns; (4) non-motion changes in events (e.g., hit or miss target, get blown up by target) with the displayed scene responsive to vehicle position, player gun operation of the like; (5) video games or presentations requiring randomized sequences wherein branching is derived from user choice and/or "randomization" supplied by a microprocessor. This "randomization" allows the same piece to be experienced numerous times with a difference each time, thereby eliminating bordeom in the presentation or injecting on elements of change in the game. Likewise, realistic video may be generated using a video camera, animation, computer animation or combinations of the above techniques.

**Claims**

1. A sequence versatile video system, comprising:

(a) an interface means (36) having an output for generating control data in response to choice data;

(b) a video disc (10) comprising a spiral track containing fields of information, each field being terminated by a blanking interval, and two fields defining a frame, to produce a plurality of video sequences, each sequence comprising a succession of frames, successive fields of at least the second and subsequent sequences being interleaved with corresponding fields of other sequences;

(c) video sequence selection means (32) having in input connected to the output of said interface means for generating sequence selection data in response to said control data;

(d) a single reading head (28) able to read only one track width, controlled by said video sequence selection means, to read successive fields for one of said video sequences and able to change from one sequence to another at any field teminating blanking interval; and

(e) a video display means (30) connected to the output of said reading head for displaying the selected sequence.

2. A video system as in claim 1, wherein said reading head is a laser, magnetic or electrocapacitive reading head.

3. A video system as in claim 1, wherein said choice data indicates the path of movement selected by a player, said data indicates a selected path of movement of an imaginary craft piloted by the player, and said video display means (30) displays said path.

4. A video system as in claim 1, wherein said control data indicates what is about to happen to the player's imaginary craft and said video display means (30) displays a video sequence which is a visual representation of what is happening to said craft.

5. A video system as in claim 2, wherein said sequences comprise a succession of frames each comprising first and second fields which are recorded in succession on a 360° portion of said spiral track.

6. A video system as in claim 2, wherein said sequences comprise a succession of frames each comprising first and second fields which are recorded on opposing 180° portions of said spiral track.

7. A video system as in claim 5, wherein the number of 360° portions of said spiral track separating the first fields of possible successive frames of a video sequence and the number of 360° portions of said spiral track separating the second fields of possible successive frames of said video sequence are both equal to the number of parallel paths corresponding to said video sequence minus one.

**Patentansprüche**

1. Video-System mit vielfältiger Sequenz, umfassend:

(a) ein Schnittstellenmittel (36) mit einem Ausgang zum Erzeugen von Steuerdaten in Antwort auf Auswahldaten;

(b) eine Video-Platte (10) mit einer Informationsfelder enthaltenden spiralförmigen Spur, wobei jedes Feld durch ein leeres Intervall beendet wird und zwei Felder ein Bild definieren, um ein Mehrzahl von Video-Sequenzen zu erzeugen, wobei jede Sequenz eine Bildfolge umfasst und aufeinanderfolgende Felder zumindest der zweiten Sequenz und der darauffolgenden Sequenzen mit den entsprechenden Feldern anderer Sequenzen verschachtelt sind;

(c) ein Auswahlmittel für Video-Sequenzen (32) mit einem Eingang, der mit dem Ausgang des Schnittstellenmittels verbunden ist, um in Antwort auf die Steuerdaten Sequenz-Auswahldaten zu erzeugen;

(d) einen einzigen Lesekopf (28), der fähig ist, nur eine Spurbreite zu lesen, von Auswahlmittel für Video-Sequenzen gesteuert wird, um auf eine der Video-Sequenzen bezogene aufeinanderfolgende Felder zu lesen, und fähig ist, bei jedem ein Feld beendenden leeren Intervall von einer der Sequenzen zu einer anderen überzugehen; und

(e) ein Video-Bildschirmmittel (30), das mit dem Ausgang des Lesekopfes verbunden ist, um die ausgewählte Sequenz sichtbar zu machen.

2. Video-System nach Anspruch 1, bei welchem der Lesekopf ein Laser-, magnetischer oder elektrokapazitiver Kopf ist.

3. Video-System nach Anspruch 1, bei welchem die Auswahldaten den Pfad einer von einem Spieler ausgewählten Bewegung angeben, die Daten einen für die Bewegung eines erdachten, vom Spieler geführten Schiffes ausgewählten Pfad angeben, und das Video-Bilderschirmmittel (30) diesen Pfad sichtbar macht.

4. Video-System nach Anspruch 1, bei welchem die Steuerdaten angeben, was demnächst dem erdachten Schiff des Spielers passieren wird, und das Video-Bildschirmmittel (30) eine Video-Sequenz sichtbar macht, die ein visuelle Darstellung von dem ist, was dem Schiff eben passiert.

5. Video-System nach Anspruch 2, bei welchem die Sequenzen eine Folge von Bildern umfassen, von denen jedes ein erstes und eine zweites Feld umfasst, welche auf einem 360°-Teil der spiralförmigen Spur aufeinanderfolgend aufgezeichnet sind.

6. Video-System nach Anspruch 2, bei welchem die Sequenzen eine Folge von Bildern umfassen, von denn jedes ein erstes und ein zweites Feld umfaßt, welche auf entgegengesetzten 180°-Teil der spiralförmigen Spur aufgezeichnet sind.

7. Video-System nach Anspruch 5, bei welchem die Zahl von 360°-Teilen der spiralförmigen Spur, welche die ersten Felder von möglichen aufeinanderfolgenden Bildern einer Videosequenz voneinander scheiden, und die Zahl von 360°-Teilen der spiralförmigen Spur, welche die zweiten Feldern von möglichen aufeinanderfolgenden Bildern der Videosequenzen voneinander scheiden, beide der Zahl parallellen Pfaden gliech sind, welche mit der Videosequenz minus eins correspondieren.

**Revendications**

1. Système vidéo à séquence versatile comportant:

(a) un moyen d'interface (36) comportant une sortie afin de produire des données de commande en réponse à des données de choix;

(b) un disque vidéo (10) comportant une piste en spirale contenant des champs d'information, chaque champ se terminant par un intervalle blanc et deux champs définissant une image, afin de produire une pluralité de séquences vidéo, chaque séquence comportant une succession d'images, les champs successifs d'au moins la deuxième séquence et les séquences suivantes étant entrelacés avec les champs correspondants d'autres séquences;

(c) un moyen de sélection de séquence vidéo (32) comportant une entrée reliée à la sortie du moyen d'interface afin de produire des données de sélection de séquence en réponse aux données de commande;

(d) une tête de lecture unique (28) capable de lire une largeur de piste seulement, commandée par le moyen de sélection de séquence vidéo afin de lire des champs successifs relatifs à l'une des séquence vidéo et capable de passer de l'une des séquence à une autre à tout intervalle blanc terminant un champ; et

(e) un moyen d'écran vidéo (30) relié à la sortie de la tête de lecture afin de visualiser la séquence sélectionnée.

2. Système vidéo selon la revendication 1, dans lequel la tête de lecture est une tête à laser, magnétique ou électrocapacitive.

3. Système vidéo selon la revendication 1, dans lequel les données de choix indiquent le trajet du mouvement sélectionné par un joueur, les données indiquent un trajet sélectionné pour le mouvement d'un vaisseau imaginaire piloté par le joueur, et le moyen d'écran vidéo (30) visualise ce trajet.

4. Système vidéo selon la revendication 1, dans lequel les données de commande indiquent ce qui est sur le point d'arriver au vaisseau imaginaire du joueur et le moyen d'écran vidéo (30) visualise une séquence vidéo qui est une représentation visuelle de ce qui est en train d'arriver au vaisseau.

5. Système vidéo selon la revendication 2, dans lequel les séquences comportent une succession d'images comprenent chacune un premier et un deuxième champ qui sont enregistrés en succession sur une partie de 360° de la piste en spirale.

6. Système vidéo selon la revendication 2, dans lequel les séquences comportent une succession d'images comprenant chacune un premier et un deuxième champ qui sont enrégistrés sur des parties opposées de 180° de la piste en spirale.

7. Système vidéo selon la revendication 5, dans lequel le nombre des parties de 180° de la piste en spirale, qui séparent les premiers champs d'images successives possibles d'une séquence vidéo, et le nombre des parties de 360° de la piste en spirale, qui séparent les deuxièmes champs d'images successives possibles de la séquence vidéo, sont les deux égaux au nombre de trajets parallels qui correspondent avec la séquence vidéo moins un.

FIGURE 1

FIGURE 2

1

FIGURE 3

TIME INTERVALS

START

FINISH

FIGURE 4

FIGURE 5

4

PROJECTED BEAM
REFLECTED BEAM

FIGURE 6

a       b       c

FIGURE 7

FIGURE 8

FIGURE 9

FIGURE 10

EP 0 144 352 B1